# EUROPEAN PATENT SPECIFICATION

(11) **EP 0 894 621 B1**
(45) Date of publication and mention of the grant of the patent: **05.07.2006**
(21) Application number: 97305673.2
(22) Date of filing: 28.07.1997
(51) Int. Cl.: B32B 27/30, B32B 7/06, B32B 37/00, B32B 33/00, B32B 38/00, C08J 5/18

(54) **Water-retardant film-lamina**
Wasserfeste Filmschicht
Feuille retardante à l'eau

(43) Date of publication of application: 03.02.1999
(73) Proprietor: Kao, Cheng-Kang, Sean Chung City, Taipei (TW)
(72) Inventor: Kao, Cheng-Kang, Sean Chung City, Taipei (TW)
(74) Representative: Alexander, Thomas Bruce

(56) References cited:
- EP-A- 0 785 244
- DE-A- 4 036 985
- GB-A- 1 558 503
- US-A- 4 889 754
- DATABASE WPI Section Ch, Week 7711 Derwent Publications Ltd., London, GB; Class A94, AN 77-18926Y XP002055199 & JP 52 013 581 A (DAISEL LTD) , 1 February 1977

## Description

The present invention relates to a water-retardant film lamina, especially to a lamina comprising a film of biaxial oriented polypropylene (BOPP), or comprising a printable prepared layer disposed on the top surface of a layer of the biaxial oriented polypropylene (BOPP). Also the biaxial oriented polypropylene (BOPP) can be laminated at both upper and lower sides with a layer of fastening agent respectively which is further applied on top with a removable layer. The biaxial oriented polypropylene film is pre-cut with tracks or openings of different shapes such as circles or rectangles at a proper interval so as to provide the advantage of easy-tearing besides water-retardation.

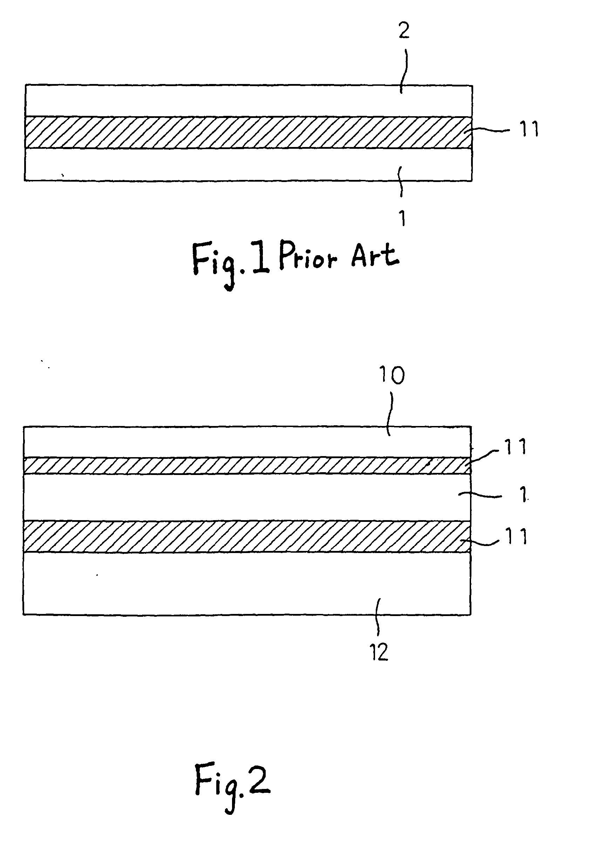

A conventional lamina generally falls into two kinds; one paper-made and the other film-made. Please refer to Figure 1. Though having the advantages of easy-printing and easy-tearing, the lamina 20, made of paper, cannot retard the encroachment of water and, to achieve the advantage of water-retardation, a film of biaxial oriented polypropylene has been applied to the surface of the lamina. Yet, the lamina made of film whilst possessing improved water-retardation loses the advantage of easy-tearing.

EP-A-O785244 discloses an easy-peeling tearable safety tape roll for packing, sealing or protection. In each embodiment, the tape lamina comprises a layer of plastic film which has a layer of adhesive applied to the bottom side thereof and a release agent applied to a top layer thereof. Thus, the layer of film which is disclosed as potentially being biaxially oriented polypropylene forms the mid layer of a three layer laminate.

It is, therefore, a primary purpose of the present invention to provide a water-retardant film lamina comprising a printable prepared layer laminated with a removable layer on a bottom side thereof by means of a fastening agent, characterised in that a top side of the printable prepared layer has applied thereto a film of biaxial oriented polypropylene with tracks or openings pre-cut therein for easy-tearing of the water-retardant film lamina.

An advantage of the present invention is that an easy-tearing, water-retardant film lamina is produced.

The lamina may comprise fastening means for applying additional layers on at least one of the top or bottom sides of the biaxial oriented polypropylene layer.

The easy-tearing, water-retardant film layer of the present invention may be used in many situations. For instance, the film layer may be attached to paper products to increase the water-retardation ability of the paper products.

Alternatively, the film layer may be attached to the surface of solid objects to provide a protective water-retardant coating. In all these situations the fastening means, such as fastening agents, for instance glue or gum, provide a pre-prepared, easy to use fixing means. This makes the easy-tearing, water-retardant layer quick and simple to use.

Preferably, the layer of biaxial oriented polypropylene (BOPP) comprises tracks or openings of different shapes such as circles or rectangles pre-cut at a proper interval in the layer of (BOPP) to ensure the advantage of easy-tearing besides that of water-retardation.

Thus, the easy-tearing of the water-retardant layer is ensured by providing tracks or openings to form a perforated demarcation of the film layer. The film layer may be easily torn into separate sections by tearing along the line of perforation.

The printable prepared layer such as printable labels, paper, cloth, textiles or wood may be made water-retardant. Especially in that the fastening means, such as glue or gum, is protected from encroachment of water through the printable prepared layer, thus preventing the fastening means losing its fastening ability.
Figure 1 is a sectional view of a conventional lamina;
Figure 2 is a sectional view of the present invention in practical application;
Figures 2A and 2B are perspective and partially sectional views of the present invention applied with biaxial oriented polypropylene and cut with either circular or rectangular tearing-tracks or openings at a proper interval;
Figure 3 is a sectional view of a lamina, included for information purposes only;
Figure 4 is another embodiment of a lamina, included for information purposes only;
Figures 5 and 5A are perspective and partially sectional views of another embodiment of laminar, included for information purpose only.

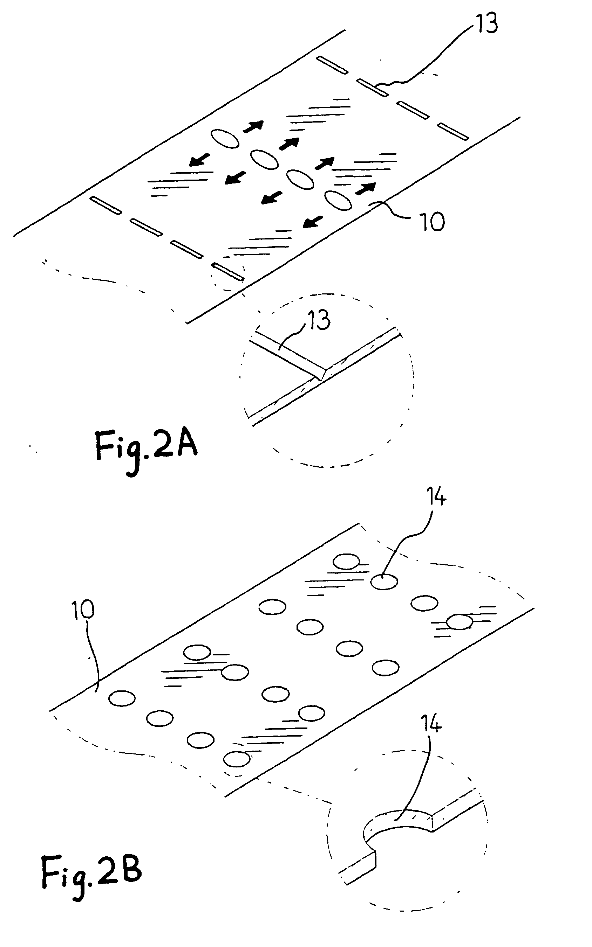

An embodiment of the present invention is shown in Figure 2. The present invention relates to a water-retardant film lamina. The lamina 20 comprises a printable prepared layer 21 (referring to the printing papers, especially to the label stock) laminated with a removable layer 12 on the bottom side by means of a layer of fastening agent 11. The fastening agent 11 may be an adhesive, gum or other paste and may be permanent, semi-permanent or temporary in its fastening ability. On the top side of the lamina 20 is applied a film of biaxial oriented polypropylene (BOPP) 10 so as to retard the encroachment of water. Tracks 13 or openings 14 of different shapes are pre-cut at a proper interval in the biaxial oriented polypropylene (BOPP) 10 film as shown in Figures 2A and 2B so that the lamina 1 can be easily torn apart at the pre-cut tracks 13 or openings 14.

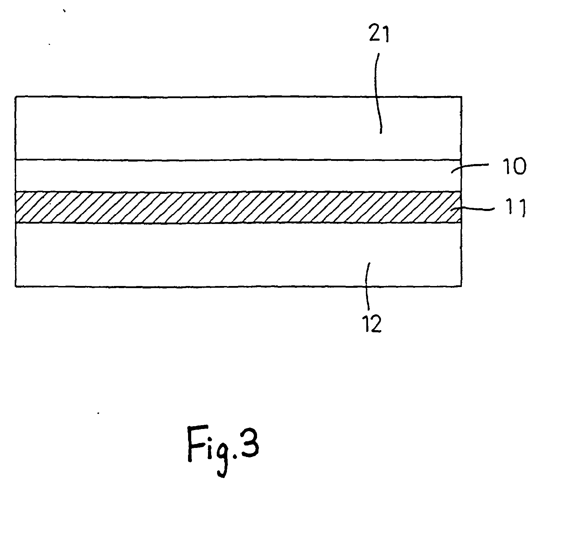

An alternative lamina is shown in Figure 3, for information purposes only. The lamina 20 comprises a printable prepared layer 21, laminated on its bottom surface by a film of the biaxial oriented polypropylene (BOPP) 10. On the bottom side of the biaxial oriented polypropylene (BOPP) 10 is disposed a layer of fastening agent 11 which is further applied with a removable layer 12 on the bottom side of the fastening agent 11. Moreover, the film of the biaxial oriented polypropylene (BOPP) can be pre-cut with tracks 13 or openings 14 of different shapes at a proper interval on the surfaces so as to ensure the easy-tearing of the lamina 1.

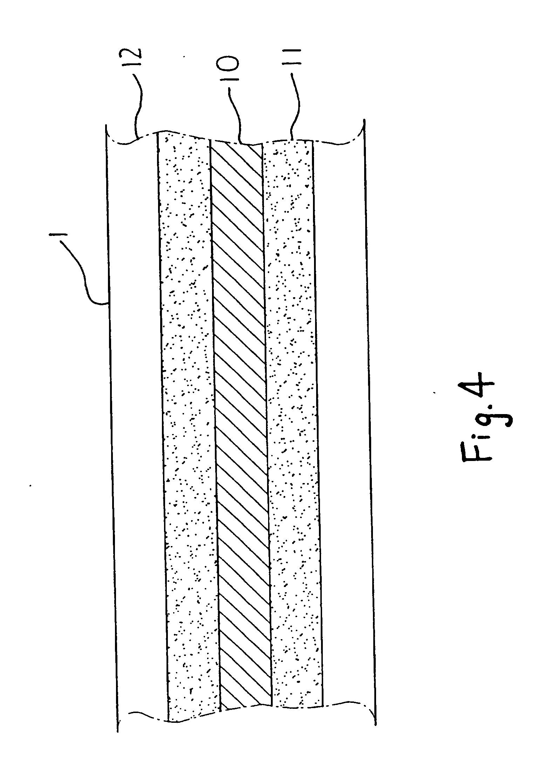

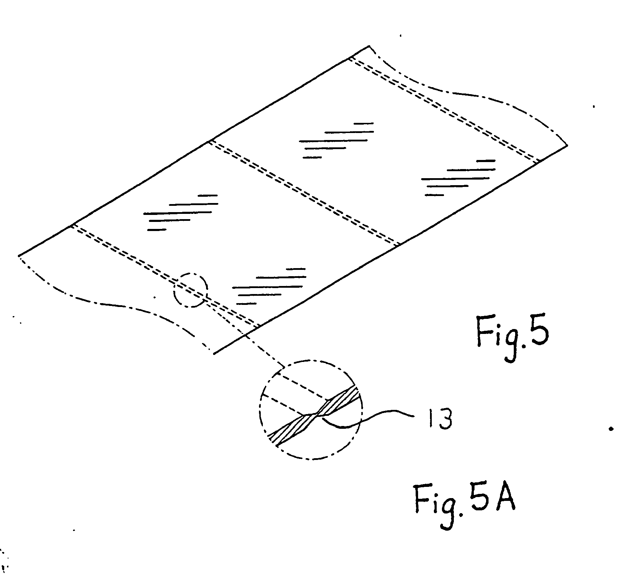

An alternative lamina is shown in Figure 4, for information purposes only. The film of biaxial oriented polypropylene (BOPP) 10 is laminated at both upper and lower faces respectively with a layer of fastening agent 11 which is further applied on top with a removable layer 12. Moreover, the film of the biaxial oriented polypropylene (BOPP) 10 is pre-cut with tracks 13 or openings 14 of different shapes at a proper interval as shown in Figures 5 and 5A, permitting the easy-tearing of the water-retardant film which can then be fastened on both sides by means of either or both layers of fastening agent 11.

Whilst the printable prepared layer 21 has been described for example purposes as printing papers, especially label stock, it should be understood that the printable prepared layer 21 may be utilised in other ways, may or may not be printed on and may be manufactured from paper, card or any other suitable medium requiring improved water-retardation.

## Claims

1. A water-retardant film lamina comprising a printable prepared layer (21) laminated with a removable layer (12) on a bottom side thereof by means of a fastening agent (11), **characterised in that** a top side of the printable prepared layer (21) has applied thereto a film of bi-axial oriented polypropylene (10) with tracks or openings (13; 14) pre-cut therein for easy-tearing of the water-retardant film lamina.

2. A water-retardant film lamina as claimed in claim 1 **characterised in that**:
the film of biaxial oriented polypropylene (BOPP) (10) comprises tracks or openings (13;14) of different shapes such as circles or rectangles pre-cut at a proper interval in the film of (BOPP) (10) to ensure the advantage of easy-tearing besides that of water-retardation

## Patentansprüche

1. Wasserfester Filmschichtstoff, umfassend eine bedruckbar hergestellte Schicht (21), welche mittels eines befestigend wirkenden Mittels (11) auf ihrer Unterseite mit einer entfernbaren Schicht (12) beschichtet ist, **dadurch gekennzeichnet, dass** auf einer Oberseite der bedruckbar hergestellten Schicht (12) ein Film aus bi-axial orientiertem Polypropylen (10) mit Spuren oder Öffnungen (13;14) aufgetragen ist, welche für ein einfaches Zerreißen des wasserfesten Filmschichtstoffs vorgestanzt sind.

2. Wasserfester Filmschichtstoff wie in Anspruch 1 beansprucht,
**dadurch gekennzeichnet, dass**
der Film aus biaxial orientiertem Polypropylen (BOPP) (10) Spuren oder Öffnungen (13; 14) mit verschiedenen Formen wie beispielsweise Kreise oder Rechtecke umfasst, welche im Film aus (BOPP) (10) in einem geeignetem Abstand vorgestanzt sind, um so den Vorteil eines einfachen Zerreißens neben dem Vorteil der Wasserfestigkeit sicherzustellen.

## Revendications

1. Feuille en film retardant l'eau comprenant une couche préparée imprimable (21) laminée avec une couche amovible (12) sur un côté inférieur de celle-ci par le biais d'un agent de retenue (11), **caractérisée en ce qu'**est appliqué sur un côté supérieur de la couche préparée imprimable (21) un film de polypropylène orienté biaxial (10) ayant des canaux ou des ouvertures (13 ; 14) prédécoupés pour un déchirement facile de la feuille en film retardant l'eau.

2. Feuille en film retardant l'eau selon la revendication 1, **caractérisée en ce que** :
le film de polypropylène orienté biaxial (BOPP) (10) comprend des canaux ou des ouvertures (13 ; 14) de différentes formes telles que des cercles ou des rectangles prédécoupés à un intervalle adapté dans le film de (BOPP) (10) pour assurer l'avantage d'un déchirement facile en plus de celui du retardement de l'eau.
